# EUROPEAN PATENT SPECIFICATION

(11) **EP 3 044 340 B1**
(45) Date of publication and mention of the grant of the patent: **15.11.2017**
(21) Application number: 14771756.5
(22) Date of filing: 12.09.2014
(51) Int. Cl.: C13B 20/00, B03D 1/14, C13B 20/16

(54) **METHOD AND INSTALLATION FOR PURIFYING A LIQUID PRODUCT**
VERFAHREN UND ANLAGE ZUR REINIGUNG EINES FLÜSSIGPRODUKTS
PROCÉDÉ ET INSTALLATION POUR LA PURIFICATION D'UN PRODUIT LIQUIDE

(30) Priority: 13.09.2013 WO PCT/CH2013/000163
(43) Date of publication of application: 20.07.2016
(73) Proprietor: Tetra Laval Holdings & Finance SA, 1009 Pully (CH)
(72) Inventor: CADEO, Angelo, CH-4665 Oftringen (CH); FERNANDEZ, Guillermo, CH-4805 Brittnau (CH)
(74) Representative: Tetra Pak - Patent Attorneys SE
(86) International application number: PCT/CH2014/000131
(87) International publication number: WO 2015/035527

(56) References cited:
- WO-A1-03/086066
- WO-A2-98/56957
- GB-A- 661 577
- US-A- 2 878 935
- US-A- 3 926 662
- US-A- 4 478 645

## Description

### Related applications

This document claims priority from the international patent application No. PCT/CH2013/000163, filed September 13, 2013.

### Technical Field

The invention relates to a method for purifying a liquid, particularly an aqueous solution containing sugar, particularly in the field of food industry, and to installations for carrying out the method, according to the independent claims.

### Background Art

Devices for purifying liquids are known. For example such devices are used in the food industry during the production of beverages for purifying an aqueous solution containing sugar. Beverages are in most cases composed of a plurality of ingredients. In many cases beverages contain a sugar solution as one ingredient. A production step consists in purifying the sugar solution in order to decolorize it and avoid undesired taste influence due to certain components of the sugar solution. Such particles, in the following called impurities, may e.g. be colloidal wax particles contained in cane sugar. They cannot be separated from the solution in a mechanical way due to their small size as compared to the mesh width of fine filters. Thus the separation has to be carried out in a physical and chemical way. As known, this is done by adding so called flocculants. The flocculants are a chemical composition as powder or in liquid form having the property of attaching to impurity molecules and in this way increasing their size. The molecules formed in this way are called microflocs. Subsequently a polymer is added to the flocculated solution in order to form macroflocs. The polymer builds a "net" with a mesh width smaller than the flocculated impurity molecules, drifts to the surface of the solution dragging along the flocculated impurities in a mesh and forms a sludge cake on top of the solution. This sludge cake is then removed, yielding a partially purified sugar solution which may be transported to a further processing unit. Related prior art is reflected by patent documents US3926662A and US4478645A.

A problem of this process is that the polymer chains forming said net break easily. Therefore the available solutions use a batch processing in order to make sure a quantity of solution stays in the flotation tank for a period of time required by the impurities to drift to the surface of the solution. As soon as the solution has been purified to the desired extent it is extracted from the flotation tank and another quantity of the unpurified solution may be processed.

### Disclosure of the Invention

It is a general objective of the invention to provide a method and an installation with an improved capability for purifying a liquid.

According to a first aspect of the invention a method for continuous purification of a liquid is provided. The method comprises the steps of
- continuously inserting the unpurified liquid into a reaction tank,
- injecting at least flocculants for flocculating impurities and air into the unpurified liquid,
- retrieving a flocculated unpurified liquid containing air from the reaction tank at a first extraction location below the injection location,
- transporting the flocculated unpurified liquid containing air towards a flotation tank,
- adding a polymer to the flocculated unpurified liquid containing air,
- inserting a flocculated unpurified liquid containing air and polymer into the flotation tank,
- removing a sludge comprising flocculated impurities from the flotation tank either continuously or during predefined time intervals, and
- continuously extracting at least partially purified liquid from the flotation tank.

In embodiments the at least partially purified liquid is extracted from the flotation tank at a distance, calculated as a value in the range between ¼ and ½ of a radius of the flotation tank, from the insertion location of the flocculated unpurified liquid containing air and polymer into the flotation tank. In this way it is made sure that the extraction of the at least partially purified liquid is carried out at a location far enough from the insertion of the unpurified liquid into the flotation tank in order to avoid also extracting flocculated impurities contained in the in-streaming unpurified liquid.

In embodiments the flocculated liquid containing air is recirculated continuously into the reaction tank, after having been extracted from the reaction tank, via a recirculation path and by means of a recirculation pump.

In embodiments the flocculated unpurified liquid containing air is mixed with the polymer by means of at least one static mixer. An amount of the polymer is added in a dosage depending on a flow speed of the flocculated unpurified liquid containing air towards the flotation tank or depending on a quantity of the flocculated unpurified liquid containing air in the flotation tank. In this way it is possible to regulate the exact dosage of the polymer to be injected into the flocculated unpurified liquid containing air.

In embodiments an insertion of the flocculated unpurified liquid containing air and polymer into the flotation tank is adjusted to form a cone-shaped stream towards the top of the flotation tank by means of a cone-shaped element protruding into the flotation tank by a predefined height.

In embodiments the at least partially purified liquid is extracted from the flotation tank at a location below the predefined height of the cone-shaped element. A quiet zone is created below the outlet of the cone-shaped element. In this quiet zone the liquid has its highest purification degree because there is very little or no mixing with the unpurified liquid coming out of the cone-shaped element. Consequently, this quiet zone is well suited for extraction of at least partially purified liquid.

Preferably the liquid levels of the reaction tank and/or of the flotation tank are monitored by level meters and a flow of the liquid into the reaction tank and/or the flotation tank is regulated based on measured liquid level values.

Preferably the sludge is removed from the flotation tank at a rate which depends on a mass of the sludge and/or on a liquid level in the flotation tank and/or on an insertion rate of the flocculated unpurified liquid containing air and polymer into the flotation tank.

The monitoring and adjustment of the liquid levels makes it possible to monitor the flow rates in the system. Furthermore the monitoring of the liquid level in the flotation tank, amongst others, makes it possible to monitor if the sludge is located at a sufficient height to be removed, e.g. to flow into a drain.

According to a second aspect of the invention an installation for continuous purification of a liquid containing sugar for carrying out the method according to the invention is provided. The installation comprises
- a reaction tank for flocculating the unpurified liquid and a flotation tank for purifying the unpurified liquid,
- at least one inlet for injecting at least flocculants for flocculating impurities into the reaction tank at an injection location, - a recirculation circuit and a recirculation pump for recirculating the unpurified liquid back into the reaction tank,
- a first pipe for transporting the flocculated unpurified liquid containing air, extracted from the reaction tank (2a) at a first extraction location (16b), into the flotation tank (2b), and
- an output pump for retrieving at least partially purified liquid from the flotation tank at a second extraction location (16d),
wherein the first extraction location is arranged below the injection location.

In embodiments the installation further comprises an auxiliary pump for introducing the polymer into the flocculated unpurified liquid containing air.

In an embodiment a transport pump is used for transporting the flocculated unpurified liquid to the flotation tank. By adding a transport pump to the installation it is possible to decouple the recirculation of the liquid from its transportation to the floating tank.

In one embodiment the flotation tank comprises in its top area a concentric channel opened towards the top and connected to a sloped drain for the removal of sludge. This arrangement advantageously makes it possible to remove the sludge in a simple way, without a need for using a dedicated pump.

In embodiments a cone-shaped element for regulating an insertion angle of the flocculated unpurified liquid containing air and polymer is arranged at the outlet of the first pipe and protrudes into the flotation tank by a predetermined height. By using the cone-shaped element it is possible to create a cone-shaped stream of the liquid. Furthermore, as mentioned, a substantially laminar stream of the liquid is reached in an area of the flotation tank below an outlet opening of the cone-shaped element. In this area, subsequently called extraction area, the liquid has a highest purification degree.

Preferably the reaction tank and/or the flotation tank comprises or comprise a thermal insulation layer in order to avoid an influence of the ambient temperature on the liquid.

Preferably the injection location and an inlet location into the recirculation circuit are not arranged on a same axis in the reaction tank. In this way it is made sure that liquid injected into the reaction tank from the recirculation circuit is not directly sucked back into the recirculation circuit.

The installation according to the invention is preferably used for purifying and/or decolorizing a sugar solution, particularly a sugar solution containing cane sugar or for purifying waste water.

Regarding the usage for sugar purification, the installation is preferably used in connection with a phosphatation/flotation process of sugar solutions or syrup.

An alternative installation may be used instead of the above mentioned installation. This installation for continuous purification of the liquid comprises
- a reaction tank for flocculating the unpurified liquid and a flotation tank for purifying the unpurified liquid,
- a recirculation circuit and a recirculation pump for recirculating the unpurified liquid back into the reaction tank,
- a first pipe for transporting the flocculated unpurified liquid, extracted from the reaction tank at a first extraction location, into the flotation tank, and
- an output pump for retrieving at least partially purified liquid from the flotation tank at a second extraction location.

Advantageous or preferred embodiments of the first installation are also applicable for the alternative installation. Particularly, elements set forth in dependent claims of the first installation may also be used in the alternative installation.

### Brief Description of the Drawing

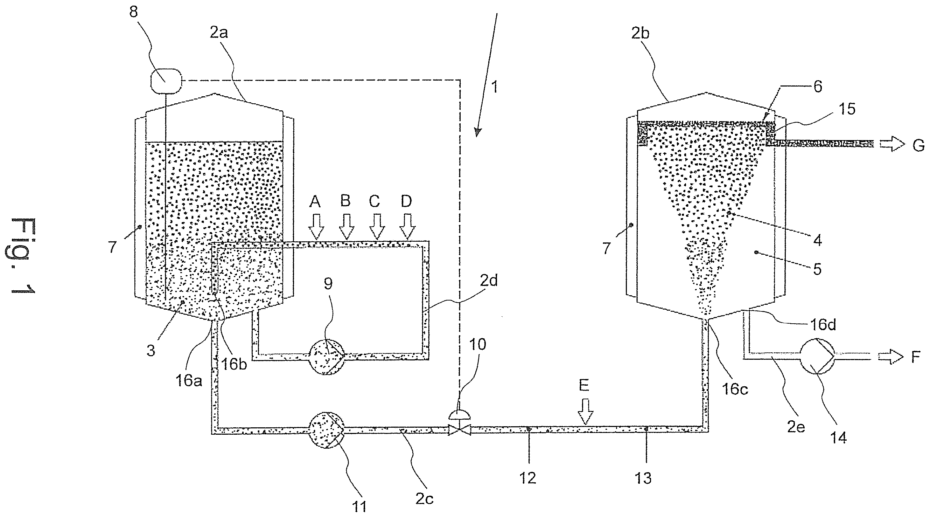

The invention will be better understood and objects other than those set forth above will become apparent when consideration is given to the following detailed description thereof. Such description makes reference to the annexed drawing, wherein Fig. 1 shows an embodiment of an installation for purifying an aqueous solution containing sugar according to the invention.

### Modes for Carrying Out the Invention

The terms "top" and "bottom" are referred to the gravitational direction. For simplification the term "solution" is used as a general term for the liquid to be purified or the purified liquid when the state of the solution is not relevant for the corresponding context. The term "partially" in connection with a purification degree of the solution denotes purification degrees usually reached with any known solution for carrying out the purification process. It is understood that the aqueous solution containing sugar is only an example for a liquid which can be purified by the installation according to the invention. The installation may be used to purify other types of liquids, like non-aqueous solutions, suspensions, dispersions and emulsions.

The figure shows an embodiment 1 of the installation according to the invention. A reaction tank 2a is filled with an unpurified aqueous solution containing sugar (sugar solution) through a not shown pipe. The reaction tank 2a is used for flocculating the unpurified solution. It further comprises a recirculation circuit 2d for transporting the solution back into the reaction tank 2a after it has been extracted therefrom. A recirculation pump 9 is used to convey the solution through the recirculation circuit 2d. The recirculation circuit 2d has the task of thoroughly mixing the solution with the flocculants and air and increasing homogeneity of the mixture. A further advantage of the recirculation circuit is that it helps creating turbulence in the reaction tank. This is particularly advantageous for inhomogeneous liquids, in which certain particles would tend to sediment at the bottom of the reaction tank.

A level meter 8 measures the solution level in the reaction tank 2a. Of course, such a level meter 8 may also be arranged to measure the solution level in a flotation tank 2b.

The reaction tank 2a is connected to the flotation tank 2b for purifying the sugar solution by means of a first pipe 2c. A transport pump 11 is used for conveying the solution into the flotation tank 2b. The flotation tank 2b is further connected to an outlet pipe 2e for removing the purified solution from it. The purified sugar solution is conveyed to a further processing installation F by means of an outlet pump 14.

In an alternative embodiment (not shown) only one pump may be used both as recirculation pump 9 and transport pump 11. In this embodiment a transport path of the flocculated unpurified solution containing air is selected between a recirculation path 2d into the reaction tank 2a and a transport path 2c to the flotation tank 2b by switching a valve.

The reaction tank 2a and the flotation tank 2b are thermally insulated by an insulation layer 7.

The level meter 8 is connected to a control device (not shown) and to a valve 10 for increasing or decreasing the flow through the first pipe 2c depending on a flow rate of the unpurified solution from the supply pipe into the reaction tank 2a.The recirculation circuit 2d has a plurality of inlets A-D for adding various materials to the solution. These materials comprise air and flocculants. Additional ingredients may also be added to the solution.

The flotation tank 2b has at its top a concentric (with respect to the longitudinal axis of the flotation tank) channel with a sloped drain 15 for removing a sludge 6 from the solution and directing it to a sludge processing unit G.

In the following said additional ingredients will be described in more detail.

Flocculants, the purpose of which has been described above, may e.g. be food-grade phosphoric acid, also called orthophosphoric acid, H₃PO₄ which is introduced into the unpurified solution via one inlet A-D. Lime Ca(OH)₂ is added via another inlet A-D as slurry with water (milk of lime). Insoluble calcium phosphates of variable composition precipitate in the solution. Colloids and other particles are adsorbed or enmeshed in the conglomerate precipitate. This process is called phosphatation.

Alternatively or additionally, aluminium sulphate Al₂(SO₄)₃ is also used as a flocculant so the impurities clump together. Furthermore there are many custom combinations sold by a variety of companies. Thus, all available flocculants for the food industry may be used alone or in combination, as the case may be. Certainly, for purifying other liquids not underlying the standards of the food industry, it is possible to use other types of flocculants.

Depending on the flocculant used, the pH-value of the flocculated solution may shift more or less towards the alkaline section. Thus, in order to avoid sugar inversion, a pH adjustment agent may also be introduced in the flocculated solution via one of the inlets A-D. In the above case of phosphatation the phosphoric acid also corrects the pH-value by acidifying the flocculated solution. The result is a neutral or slightly acidic solution with a pH operational value ranging e.g. between 7.0 and 7.4.

Furthermore an anti-foaming agent may be added via one of the inlets A-D. Such agents are readily available on the market, e.g. AVIFOAM S30.

Another additive may be introduced via one of the inlets A-D for decolourisation of the solution, e.g. granular activated carbon (GAC) or Talofloc® or Colorgone®.

Other agents, like viscosity reducers, etc. may also be supplied into the solution via the inlets A-D.

The flocculated solution now contains microflocs which are easier to remove than the original impurities. For removing the microflocs a polymer is injected into the first pipe 2c from a polymer distribution unit E. This polymer is used as a flotation aid for the flocculated particles containing impurities. On the one hand it binds the microflocs, resulting in macroflocs which are shaped as a net rising to the surface of the solution. On the other hand residual impurities in the solution are also dragged to the surface along with the net. A wide range of such polymers are available for usage in the food industry, based on polyacrylamide (C₃H₅NO)ₙ. Such a product is e.g. Magnafloc® LT27 made by BASF. This is a copolymer of acrylamide and acrylic acid acting as an anionic polyelectrolyte. An alternative product is Taloflote®.

It is noted that the above mentioned agents for the different tasks are not limited to the explicitly named agents. Particularly, the examples have been chosen for a sugar solution. However, the present invention is not limited to sugar solutions but may be used for a wide variety of liquids or solutions which have to undergo a purification process. The additives mentioned above may therefore vary, depending on the solution to be purified. It is also noted that the flocculants and/or polymers may be present as powder or as liquid and are normally synthetic compounds. In case they are present as powder it is possible to mix them with water and introduce this solution into the reaction tank.

The quantities of the required agents may vary substantially depending on the required quality of the clarified solution. For example, in a °Brix 60 initial unpurified solution of one ton of sugar and 700 1 of water the amount of flocculants may be of 0.15% (1.5 kg). This amount may be divided between different flocculants, like lime and aluminium sulphate. The amount of polymer in solid form, like polyacrylamide, may be of less than 0.05%, water being added to the polymer. It must be noted that in case of foodstuff liquid to be purified the polymer amount is given as an indicative value but may be much less, depending on country-specific regulations regarding the maximum amount of polymer allowed in order to ensure health safety. For other applications the polymer amount may exceed said maximum value.

The required quality of the clarified solution depends on country regulations. Each country specifies the maximum allowable quantities of certain impurities, like ash, in a partially clarified sugar solution. The partially clarified sugar solution, also called partially clarified liquid here, means in the context of this document that the clarified solution always has residual impurities which cannot be removed but are acceptable. For example, a sugar solution considered as purified may have a purification degree ranging between 40 and 70%, depending on sugar type and allowable ash percentage. The quality of the solution is measured in ICUMSA in a known way by means of a colorimeter/photometer. The colorimeter/photometer returns a low result of ICUMSA 45 when analyzing highly refined sugar, and a higher rating of ICUMSA 1000 or more when analyzing raw sugars.

In the following the steps for purifying the aqueous unpurified solution are described in more detail.

The unpurified aqueous solution is inserted into the reaction tank 2a normally having an optimum temperature for flocculation, depending on the solution. For example, in case of an aqueous solution containing sugar this temperature may be around 85°C. Flocculants for flocculating impurities and air are added to the unpurified aqueous solution at an injection location 16b. The dosage of the flocculants is calculated in a known way which is not described here in more detail. The flocculated unpurified solution is continuously recirculated such that the chemical reaction between the impurities of the solution and the flocculants is facilitated by a homogenization of the mixture due to the recirculation. The chemical reaction and the reaction time are known by the skilled person.

Subsequently the flocculated unpurified solution containing air is retrieved from the reaction tank 2a at a first extraction location 16a located below the injection location 16b.

The air added to the solution enters the reaction tank 2a at the injection location 16b as air bubbles. This is illustrated in the figure by the dots in the reaction tank 2a. Typically the air bubbles have different sizes and therefore experience different buoyancies when entering the reaction tank 2a. As a result they drift to the surface of the reaction tank 2a with different speeds and escapes into the tank atmosphere. Certainly, the reaction tank 2a has a connection to the ambient atmosphere such that surplus air can escape from the reaction tank 2a. According to said buoyancy differences larger bubbles drift to the surface faster than small bubbles. For the present case small bubbles which are used for flotation are considered to have a diameter smaller than or equal to 1 mm.

By extracting the flocculated unpurified solution containing air 12 at the first extraction location 16a, which is situated lower than the injection location 16b, it is possible to "sort" the air bubbles. This is based on the fact that only small bubbles 3 are present in the area between the injection location 16b and the first extraction location 16a. As a result, for the purification process the flocculated unpurified solution containing only the small air bubbles 3 is extracted from the reaction tank 2a into the first pipe 2c.

The distance between the injection location 16b and the extraction location 16a depends on the output pressure of the flocculant solution containing air coming out of the inlets A-D. A high pressure means a longer distance and a small pressure a smaller distance. Certainly, other parameters also may have to be considered, like the viscosity of the unpurified solution/liquid, which relates to a resistance force acting on the bubble/additive mix, the buoyancy of the bubbles of different diameters, injection pressure of the flocculants and air, extraction speed of the flocculated unpurified liquid containing air, maximum diameter of air bubbles to be extracted from the reaction tank 2a and the geometry of the reaction tank 2a. Normally the reaction tanks are cone-shaped at their bottom, the extraction location 16a being the cone tip, as can be seen in Fig. 1. The injection location 16b may be arranged lower in the reaction tank in case of a steep cone than in case of less steep cone. An indicative value is arranging the injection location 16b about at the same level as the end of the cone (cone base). For example, the distance may e.g. be between 30 and 50 cm. In one embodiment the distance may be adjustable by adjusting the injection location 16b. For this purpose the corresponding pipe may have a telescopic end section towards the injection location 16b. However, other possibility like displacement of the inlet pipe may also be used.

A desired side effect of the air bubble separation is that the large bubbles drifting to the surface of the solution help mixing the flocculants and the unpurified solution by creating turbulences in the solution. Thus the reaction time of the flocculants and the impurities may be accelerated.

As mentioned the flocculated unpurified solution containing air 12 is transported into the flotation tank 2b. During the transport through the first pipe 2c a polymer is added to the flocculated unpurified solution containing air 12. It is also possible to add the polymer in the flotation tank 2b. The flocculated unpurified solution containing air is mixed with the polymer by means of at least one static mixer (not shown). An amount of the polymer is added in a dosage depending on a flow speed of the flocculated solution towards the flotation tank. The flocculated unpurified solution containing air and polymer 13 is subsequently inserted into a bottom area of the flotation tank 2b.

As mentioned the polymer forms a substantially horizontal "net" drifting to the surface of the flotation tank 2b and carrying along the microflocs (impurity particles with attached flocculant particles) as macroflocs, and also dragging along residual impurities in the solution, as the mesh width of the polymer net is smaller than the particle size of most impurities. At this step an important advantage of the invention becomes clear; because the solution 13 contains only bubbles with substantially the same size, the polymer net is transported to the surface by the aid of the air bubbles relatively uniformly throughout its cross section. Without the previously carried out bubble size selection in the reaction tank 2a large bubbles would tend to drift to the surface very fast and would break the delicate polymer net, resulting in that many impurities would remain in the bottom area of the flotation tank or would drift to the surface only very slow. Obviously the purification process would be slowed down.

As the polymer net carrying the flocculant-impurity particles travels to the top of the flotation tank 2b it builds up a sludge cake 6 at the top of the flotation tank 2b. This sludge cake 6 comprising flocculated impurities is removed either continuously or during predefined time intervals. Preferably the sludge 6 is removed from the flotation tank 2b at a rate which depends on a mass of the sludge 6 and/or on a liquid level in the flotation tank 2b and/or on an insertion rate of the flocculated unpurified solution containing air and polymer 13 into the flotation tank 2b. The removal takes place via the concentric channel 15, which is opened towards the top. Thus, the sludge 6 rising over the edge of the channel 15 is poured into the channel 15 and disposed of via a sloped drain. The sludge 6 may be directed to a further processing unit (not shown) in which sugar residues may be extracted from it.

As mentioned the insertion of the flocculated unpurified solution containing air and polymer 13 into the flotation tank 2b is adjusted to form a cone-shaped stream towards the top of the flotation tank 2b. This is done by a cone-shaped element 17 for regulating an insertion angle of the flocculated unpurified solution containing air and polymer 13, which is arranged at the outlet 16c of the first pipe 2c into the flotation tank 2b and protrudes into the flotation tank 2b by a predefined height, being responsible for creating the cone-shaped solution stream 4.

The at least partially purified aqueous solution 5 is extracted from the flotation tank 2b at a location 16d, preferably at the bottom of the flotation tank 2b. The second extraction location 16d is arranged at a distance calculated as e.g. between ¼ and ½ of the radius of the flotation tank 2b from the insertion location 16c of the flocculated unpurified solution containing air and polymer 13. It is understood that said distance depends on shape and size of the flotation tank 2b and may vary from the above mentioned preferred range. In this way it is made sure that only at least partially purified solution is extracted, without interfering with the insertion of the cone-shaped stream of unpurified liquid containing air and polymer 13, in order to avoid also extracting flocculated impurities contained in the in-streaming unpurified solution 13.

The claimed method and installation have the advantage that it optimized the purification process of sugar containing aqueous solutions by allowing a continuous purification process. By using only small air bubbles for facilitating the transportation of the flocculant-impurity particles to the surface of the solution and generating a cone-shaped stream for this it is possible to continuously extract purified solution from the flotation tank from the area outside the cone-shaped stream.

While there are shown and described presently preferred embodiments of the invention, it is to be distinctly understood that the invention is not limited thereto but may otherwise variously be embodied and practised within the scope of the following claims. Therefore, terms like "preferred" or "in particular" or "particularly" or "advantageously", etc. signify optional and exemplary embodiments only.

## Claims

1. Method for continuous purification of liquid, comprising the steps of
- continuously inserting the unpurified liquid into a reaction tank (2a),
- injecting at least flocculants for flocculating impurities, and air into the unpurified liquid,
- retrieving a flocculated unpurified liquid containing air (12) from the reaction tank (2a) at a first extraction location (16a) located below the injection location (16b),
- transporting the flocculated unpurified liquid containing air (12) towards a flotation tank (2b),
- adding a polymer to the flocculated unpurified liquid containing air (12),
- inserting a flocculated unpurified liquid containing air and polymer (13) into the flotation tank (2b),
- removing a sludge (6) comprising flocculated impurities from the flotation tank (2b) either continuously or during predefined time intervals, and
- continuously extracting at least partially purified liquid (5) from the flotation tank (2b, wherein
the flocculated unpurified liquid containing air (12) is continuously recirculated into the reaction tank (2a), after having been extracted from the reaction tank (2a), via a recirculation path (2d) and by means of a recirculation pump (9).

2. Method according to one of the preceding claims, wherein the flocculated unpurified liquid containing air (12) is mixed with the polymer by means of at least one static mixer, wherein an amount of the polymer is added in a dosage depending on a flow speed of the flocculated unpurified liquid containing air (12) towards the flotation tank (2b) or depending on a quantity of the flocculated unpurified liquid containing air, present (12) in the flotation tank (2b).

3. Method according to one of the preceding claims, wherein an insertion of the flocculated unpurified liquid containing air and polymer (13) into the flotation tank (2b) is adjusted to form a cone-shaped stream (4) towards the top of the flotation tank (2b) by means of a cone-shaped element (17) protruding into the flotation tank (2b) by a predefined height.

4. Method according to claim 3, wherein the at least partially purified liquid (5) is extracted from the flotation tank (2b) at a location below the predefined height of the cone-shaped element (17).

5. Method according to one of the preceding claims, wherein the at least partially purified liquid (5) is extracted from the flotation tank (2b) at a distance, calculated as a value in the range between ¼ and ½ of a radius of the flotation tank, from an insertion location (16c) of the flocculated unpurified liquid containing air and polymer (13) into the flotation tank (2b).

6. Method according to one of the preceding claims, wherein the liquid levels of the reaction tank (2a) and/or of the flotation tank (2b) are monitored by level meters (8) and a flow of the liquid into the reaction tank (2a) and/or the flotation tank (2b) is regulated based on measured liquid level values.

7. Method according to one of the preceding claims, wherein the sludge (6) is removed from the flotation tank (2b) at a rate which depends on a mass of the sludge (6) and/or on a liquid level in the flotation tank (2b) and/or on an insertion rate of the flocculated unpurified liquid containing air and polymer (13) into the flotation tank (2b).

8. Method according to one of the preceding claims, wherein at least one additional compound is introduced into the reaction tank (2a) at the inlet location (16b), wherein the additional compound is chosen from a group consisting of: a decolourisation agent, a pH-value regulator, an anti-foaming agent, a viscosity reducer.

9. Method according to one of the preceding claims, wherein a distance between the injection location (16b) and the first extraction location (16a) is calculated based on but not limited to at least one of: viscosity of the unpurified liquid, injection pressure of the flocculants and air, extraction speed of the flocculated unpurified liquid containing air (12), buoyancy of injected air bubbles, maximum diameter of air bubbles to be extracted from the reaction tank, geometry of the reaction tank (2a).

10. Installation (1) for continuous purification of a liquid for carrying out the method according to one of the preceding claims, comprising
- a reaction tank (2a) for flocculating the unpurified liquid and a flotation tank (2b) for purifying the unpurified liquid,
- an injection location (16b) for injecting air to the unpurified liquid in the reaction tank (2a),
- a recirculation circuit (2d) and a recirculation pump (9) for recirculating the unpurified liquid back into the reaction tank (2a),
- a first pipe (2c) for transporting the flocculated unpurified liquid (12, 13), extracted from the reaction tank (2a) at a first extraction location (16a), into the flotation tank (2b), and
- an output pump (14) for retrieving at least partially purified liquid from the flotation tank (2b) at a second extraction location (16d).

## Patentansprüche

1. Verfahren zur kontinuierlichen Reinigung von Flüssigkeit, umfassend die Schritte:
- kontinuierliches Einleiten der ungereinigten Flüssigkeit in einen Reaktionstank (2a),
- Einspritzen von mindestens Flockungsmitteln zum Ausflocken der Verunreinigungen und Luft in die ungereinigte Flüssigkeit,
- Rückgewinnen einer ausgeflockten, ungereinigten flüssigkeithaltigen Luft (12) aus dem Reaktionstank (2a) an einer ersten Entnahmestelle (16a), die unterhalb der Einspritzstelle (16b) angeordnet ist,
- Transportieren der ausgeflockten, ungereinigten flüssigkeithaltigen Luft (12) in Richtung eines Flotationstanks (2b),
- Zugeben eines Polymers zu der ausgeflockten, ungereinigten flüssigkeithaltigen Luft (12),
- Einleiten der ausgeflockten, ungereinigten flüssigkeithaltigen Luft und Polymer (13) in den Flotationstank (2b),
- Entfernen eines Schlamms (6), der ausgeflockte Verunreinigungen aus dem Flotationstank (2b) umfasst, entweder kontinuierlich oder während vordefinierter Zeitintervalle und
- kontinuierliches Extrahieren von mindestens teilweise gereinigter Flüssigkeit (5) aus dem Flotationstank (2b), wobei
die ausgeflockte, ungereinigte flüssigkeithaltige Luft (12) kontinuierlich in den Reaktionstank (2a) rückgeleitet wird, nachdem sie aus dem Reaktionstank (2a) über eine Rückleitungsbahn (2d) und mittels einer Rückleitungspumpe (9) extrahiert wurde.

2. Verfahren nach einem der vorhergehenden Ansprüche, wobei die ausgeflockte, ungereinigte flüssigkeithaltige Luft (12) mit dem Polymer mittels mindestens einem statischen Mischer gemischt wird, wobei eine Menge von Polymer in einer Dosierung zugegeben wird, die von einer Strömungsgeschwindigkeit der ausgeflockten ungereinigten flüssigkeithaltigen Luft (12) in Richtung eines Flotationstanks (2b) abhängig ist oder von einer Menge der ausgeflockten, ungereinigten flüssigkeithaltigen Luft abhängig ist, die in dem Flotationstank (2b) vorhanden (12) ist.

3. Verfahren nach einem der vorhergehenden Ansprüche, wobei eine Einleitung der ausgeflockten, ungereinigten flüssigkeithaltigen Luft und Polymer (13) in den Flotationstank (2b) eingestellt wird, um eine kegelförmige Strömung (4) in Richtung der Oberseite des Flotationstanks (2b) mittels eines kegelförmigen Elements (17) zu bilden, das in den Flotationstank (2b) mit einer vordefinierten Höhe vorsteht.

4. Verfahren nach Anspruch 3, wobei die mindestens teilweise gereinigte Flüssigkeit (5) aus dem Flotationstank (2b) an einer Stelle unterhalb der vordefinierten Höhe des kegelförmigen Elements (17) extrahiert wird.

5. Verfahren nach einem der vorhergehenden Ansprüche, wobei die mindestens teilweise gereinigte Flüssigkeit (5) aus dem Flotationstank (2b) in einem Abstand extrahiert wird, der als ein Wert in dem Bereich zwischen 1/4 und 1/2 eines Radius des Flotationstanks von einer Einleitungsstelle (16c) der ausgeflockten, ungereinigten flüssigkeithaltigen Luft und Polymer (13) in den Flotationstank (2b) berechnet wird.

6. Verfahren nach einem der vorhergehenden Ansprüche, wobei die Flüssigkeitspegel des Reaktionstanks (2a) und/oder des Flotationstanks (2b) durch Füllstandmesser (8) überwacht werden und eine Strömung der Flüssigkeit in den Reaktionstank (2a) und/oder den Flotationstank (2b) auf der Grundlage der gemessenen Flüssigkeitspegelwerte reguliert wird.

7. Verfahren nach einem der vorhergehenden Ansprüche, wobei der Schlamm (6) aus dem Flotationstank (2b) bei einer Rate entfernt wird, die von einer Masse des Schlamms (6) und/oder von einem Flüssigkeitspegel in dem Flotationstank (2b) und/oder einer Einleitungsrate der ausgeflockten, ungereinigten flüssigkeithaltigen Luft und Polymer (13) in den Flotationstank (2b) abhängig ist.

8. Verfahren nach einem der vorhergehenden Ansprüche, wobei mindestens eine zusätzliche Verbindung in den Reaktionstank (2a) an der Einlassstelle (16b) eingeleitet wird, wobei die zusätzliche Verbindung ausgewählt ist aus der Gruppe, bestehend aus: einem Entfärbungsmittel, einem pH-Wert-Regler, einem Antischaummittel und einem Viskositätserniedriger.

9. Verfahren nach einem der vorhergehenden Ansprüche, wobei ein Abstand zwischen der Einspritzstelle (16b) und der ersten Entnahmestelle (16a) basierend auf, aber nicht eingeschränkt auf, mindestens einem von Folgendem berechnet wird:
Viskosität der ungereinigten Flüssigkeit, Einspritzdruck der Flockungsmittel und Luft, Extraktionsgeschwindigkeit der ausgeflockten, ungereinigten flüssigkeithaltigen Luft (12), Auftrieb der eingespritzten Luftblasen, maximalem Durchmesser der aus dem Reaktionstank zu extrahierenden Luftblasen, Geometrie des Reaktionstanks (2a).

10. Anlage (1) zur kontinuierlichen Reinigung einer Flüssigkeit zur Ausführung des Verfahrens nach einem der vorhergehenden Ansprüche, umfassend
- einen Reaktionstank (2a) zum Ausflocken der ungereinigten Flüssigkeit und einen Flotationstank (2b) zum Reinigen der ungereinigten Flüssigkeit,
- eine Einspritzstelle (16b) zum Einspritzen von Luft zu der ungereinigten Flüssigkeit in dem Reaktionstank (2a),
- einen Rückleitungskreislauf (2d) und eine Rückleitungspumpe (9) zum Rückführen der ungereinigten Flüssigkeit zurück in den Reaktionstank (2a),
- ein erstes Rohr (2c) zum Transportieren der ausgeflockten ungereinigten Flüssigkeit (12, 13), die von dem Reaktionstank (2a) an einer ersten Entnahmestelle (16a) extrahiert werden, in den Flotationstank (2b) und
- eine Auslasspumpe (14) zum Rückgewinnen von mindestens teilweise gereinigter Flüssigkeit aus dem Flotationstank (2b) an einer zweiten Entnahmestelle (16d).

## Revendications

1. Procédé de purification continue d'un liquide, comprenant les étapes consistant à :
- insérer en continu le liquide non purifié dans une cuve de réaction (2a),
- injecter au moins des floculants pour floculer des impuretés, et de l'air dans le liquide non purifié,
- récupérer un liquide non purifié floculé contenant de l'air (12) à partir de la cuve de réaction (2a) à un premier emplacement d'extraction (16a) situé au-dessous de l'emplacement d'injection (16b),
- transporter le liquide non purifié floculé contenant de l'air (12) vers une cuve de flottation (2b),
- ajouter un polymère au liquide non purifié floculé contenant de l'air (12),
- insérer un liquide non purifié floculé contenant de l'air et le polymère (13) dans la cuve de flottation (2b),
- retirer une boue (6) comprenant des impuretés floculées de la cuve de flottation (2b) en continu ou pendant des intervalles de temps prédéfinis, et
- extraire en continu un liquide au moins partiellement purifié (5) de la cuve de flottation (2b), dans lequel
le liquide non purifié floculé contenant de l'air (12) est recyclé en continu dans la cuve de réaction (2a), après avoir été extrait de la cuve de réaction (2a), par un chemin de recyclage (2d) et au moyen d'une pompe de recyclage (9).

2. Procédé selon une des revendications précédentes, dans lequel le liquide non purifié floculé contenant de l'air (12) est mélangé avec le polymère au moyen d'au moins un mélangeur statique, une quantité du polymère étant ajoutée dans un dosage dépendant d'une vitesse d'écoulement du liquide non purifié floculé contenant de l'air (12) vers la cuve de flottation (2b) ou dépendant d'une quantité du liquide non purifié floculé contenant de l'air (12) présent dans la cuve de flottation (2b).

3. Procédé selon une des revendications précédentes, dans lequel une insertion du liquide non purifié floculé contenant de l'air et le polymère (13) dans la cuve de flottation (2b) est réglée pour former un courant en forme de cône (4) vers le sommet de la cuve de flottation (2b) au moyen d'un élément en forme de cône (17) faisant saillie à l'intérieur de la cuve de flottation (2b) d'une hauteur prédéfinie.

4. Procédé selon la revendication 3, dans lequel le liquide au moins partiellement purifié (5) est extrait de la cuve de flottation (2b) à un emplacement au-dessous de la hauteur prédéfinie de l'élément en forme de cône (17).

5. Procédé selon une des revendications précédentes, dans lequel le liquide au moins partiellement purifié (5) est extrait de la cuve de flottation (2b) à une distance, calculée comme une valeur dans la gamme entre ¼ et ½ d'un rayon de la cuve de flottation, depuis un emplacement d'insertion (16c) du liquide non purifié floculé contenant de l'air et le polymère (13) dans la cuve de flottation (2b).

6. Procédé selon une des revendications précédentes, dans lequel les niveaux de liquide de la cuve de réaction (2a) et/ou de la cuve de flottation (2b) sont surveillés par des limnimètres (8) et un écoulement du liquide dans la cuve de réaction (2a) et/ou la cuve de flottation (2b) est régulé sur la base de valeurs mesurées de niveau de liquide.

7. Procédé selon une des revendications précédentes, dans lequel la boue (6) est retirée de la cuve de flottation (2b) à une vitesse qui dépend d'une masse de la boue (6) et/ou d'un niveau de liquide dans la cuve de flottation (2b) et/ou d'une vitesse d'insertion du liquide non purifié floculé contenant de l'air et le polymère (13) dans la cuve de flottation (2b).

8. Procédé selon une des revendications précédentes, dans lequel au moins un composé supplémentaire est introduit dans la cuve de réaction (2a) à l'emplacement d'entrée (16b), le composé supplémentaire étant choisi dans un groupe constitué par : un agent de décoloration, un régulateur de pH, un agent antimousse, un réducteur de viscosité.

9. Procédé selon une des revendications précédentes, dans lequel une distance entre l'emplacement d'injection (16b) et le premier emplacement d'extraction (16a) est calculée sur la base de, mais sans s'y limiter, au moins un élément parmi : la viscosité du liquide non purifié, la pression d'injection des floculants et de l'air, la vitesse d'extraction du liquide non purifié floculé contenant de l'air (12), la flottabilité de bulles d'air injectées, le diamètre maximal de bulles d'air devant être extraites de la cuve de réaction, la géométrie de la cuve de réaction (2a).

10. Installation (1) pour la purification continue d'un liquide destiné à réaliser le procédé selon une des revendications précédentes, comprenant
- une cuve de réaction (2a) pour floculer le liquide non purifié et une cuve de flottation (2b) pour purifier le liquide non purifié,
- un emplacement d'injection (16b) pour injecter de l'air dans le liquide non purifié dans la cuve de réaction (2a),
- un circuit de recyclage (2d) et une pompe de recyclage (9) pour recycler le liquide non purifié dans la cuve de réaction (2a),
- un premier tuyau (2c) pour transporter le liquide non purifié floculé (12, 13), extrait de la cuve de réaction (2a) à un premier emplacement d'extraction (16a), à l'intérieur de la cuve de flottation (2b), et
- une pompe de sortie (14) pour récupérer un liquide au moins partiellement purifié de la cuve de flottation (2b) à un deuxième emplacement d'extraction (16d).
